# DEMANDE DE BREVET EUROPEEN

(11) **EP 1 342 417 A1**
(43) Date de publication de la demande: **10.09.2003**
(21) Numéro de dépôt: 03290484.9
(22) Date de dépôt: 28.02.2003
(51) Int. Cl.: A23G 3/00, A23G 3/02

(54) **Confiserie gelifiee contenant peu ou pas de gelatine et procede de preparation d'une telle confiserie**

(30) Priorité: 07.03.2002 FR 0202917
(71) Demandeur: Roquette Frères, 62136 Lestrem (FR)
(72) Inventeur: Boursier, Bernard, 62138 Violaines (FR); Lesage, Daniel, 59670 Sainte Marie Cappel (FR)
(74) Mandataire: Boulinguiez, Didier

(57) **Abrégé**

L'invention a pour objet un procédé de préparation d'une confiserie gélifiée contenant peu ou pas de gélatine, à base d'amidon, caractérisée en ce qu'elle comprend les étapes de :
- formation d'une suspension d'édulcorant et d'un mélange d'amidon riche en amylopectine et de carraghénanes dans de l'eau de manière à obtenir une matière sèche comprise entre 65 et 72% en poids,
- cuisson de ladite suspension à une température telle que l'amidon soit cuit et dispersé,
- mise en forme de la suspension cuite de manière à obtenir des confiseries,
- étuvage des confiseries pour obtenir la matière sèche finale souhaitée,
- récupération des confiseries gélifiées ainsi obtenues.

## Description

L'invention a pour objet une confiserie gélifiée contenant peu ou pas de gélatine. Elle a également pour objet un procédé de préparation d'une telle confiserie.

Les confiseries gélifiées encore appelées « gélifiés » (ou « jellies » en anglais) auxquelles se rapporte la présente invention ont longtemps été préparées par cuisson et moulage de mélanges de sirops de sucre et de gélatine, la gélatine étant l'hydrocolloïde le plus adapté techniquement à la préparation des gélifiés, en raison de la texture élastique unique qu'elle leur confère, et qui est particulièrement appréciée des consommateurs. L'invention ne concerne pas les gommes, traditionnellement préparées à partir de gomme arabique ou composés équivalents et qui se différencient des gélifiés par leur texture plus ferme et moins élastique.

La gélatine, qui est obtenue par extraction de matières premières d'origine bovine ou porcine, a subi un désintérêt marqué depuis la crise liée à l'encéphalopathie spongiforme bovine (ESB) mais aussi de la part des consommateurs végétariens notamment. De plus, la gélatine étant une protéine, celle-ci est très sensible aux conditions de pH et de température extrêmes (pH très acides, températures très élevées) dans lesquelles elle a tendance à se dégrader, perdant ainsi ses propriétés gélifiantes.

De nombreuses solutions ont alors été proposées en remplacement de la gélatine, et ce même avant la crise de l'ESB. On connaît en particulier des confiseries gélifiées à base d'amidons divers. L'amidon standard natif est constitué par deux composés : l'amylose et l'amylopectine. L'amylose est connue pour ses propriétés proches de celles de la gélatine. Le document US 3,218,177 décrit des confiseries gélifiées préparées à partir d'amidons riches en amylose. Celles-ci sont préparées par cuisson d'un sirop comprenant un amidon dont le rapport amylose/amylopectine est compris entre 75 :25 et 40 :60. Ces confiseries présentent toutefois l'inconvénient de perdre leur élasticité et de devenir cassantes au cours du temps. Pour remédier à ce problème, une solution a alors été proposée dans le brevet EP 0 591 473. Cette solution consiste à utiliser un mélange d'amidon de maïs standard fluidifié ou oxydé et d'amidon riche en amylose fluidifié en milieu acide. L'intérêt des amidons riches en amylose a par ailleurs été largement commenté dans le document « CONFECTIONERY MANUFACTURE AND MARKETING, vol.24, n°6, 1987 ».

L'utilisation d'environ 1% d'amidons modifiés a enfin été décrite en toute généralité en association avec un mélange d'iota et de kappa carraghénanes dans le document WO 00/19836, les meilleurs résultats sont toutefois obtenus avec les systèmes gélifiants composés uniquement de carraghénanes. Ces systèmes se révèlent alors relativement coûteux.

Cherchant à améliorer l'état de la technique, la Demanderesse s'est alors attachée à développer un substitut de gélatine peu coûteux à base d'amidon ne nécessitant pas une modification chimique ou physique complexe, susceptible de conférer à des confiseries gélifiées la même texture que celles préparées à l'aide de gélatine.

Elle a alors trouvé, à l'issue de nombreux travaux de recherche que ce but pouvait être atteint dès lors qu'on utilise, dans un procédé particulier, un mélange d'amidon riche en amylopectine (et donc à faible teneur en amylose) et de carraghénanes, ces derniers présentant une bonne compatibilité avec le réseau formé par l'amylopectine. La mise en oeuvre d'amidon riche en amylopectine permet d'obtenir un réseau rétrogradé de forte élasticité.

L'invention a donc pour objet un procédé de préparation de confiseries gélifiées à base d'amidon contenant peu ou pas de gélatine, caractérisé en ce qu'il comprend les étapes de :
- formation d'une suspension d'édulcorant et d'un mélange d'amidon riche en amylopectine et de carraghénanes, dans de l'eau de manière à obtenir une matière sèche comprise entre 65 et 72% en poids,
- cuisson de ladite suspension à une température telle que l'amidon soit cuit et dispersé,
- mise en forme de la suspension cuite de manière à obtenir des confiseries,
- étuvage des confiseries pour obtenir une matière sèche de 78 à 90% en poids,
- récupération des confiseries gélifiées ainsi obtenues.

On entend par amidon riche en amylopectine selon la présente invention, les amidons de toute origine qui présentent une teneur en amylopectine supérieure ou égale à 70%. Ces amidons sont communément appelés amidons « waxy » ou amidons cireux. Ils sont obtenus généralement à partir de maïs, de riz, de pomme de terre, soit sous forme native, soit sous forme hybride.

Il est particulièrement surprenant qu'un tel amidon riche en amylopectine puisse convenir à la préparation de confiseries gélifiées de qualité. Ceci va en effet à l'encontre de tous les préjugés jusqu'ici formulés pour ce type d'amidons, qui étaient décrits jusqu'alors comme ayant des propriétés proches de la gomme arabique, alors que les amidons riches en amylose sont connus pour avoir des propriétés proches de celles de la gélatine. On peut citer à cet effet le document « The European Food and Drink Review-Autumn 1998, p57 - 60 ».

Tous les amidons riches en amylopectine conviennent bien. Selon une variante préférée de l'invention, on utilisera un amidon waxy natif. Selon une variante encore plus préférée, on utilisera un amidon de maïs waxy. Un amidon waxy fluidifié par l'une quelconque des méthodes traditionnelles de réduction de la viscosité à chaud des amidons peut également être utilisé, mais son niveau de fluidité sera limité car c'est l'amylopectine sous forme native qui apportera la texture la plus élastique.

En ce qui concerne les carraghénanes, ce sont les carraghénanes gélifiants qui sont préférés, c'est à dire les iota et kappa carraghénanes. Le iota-carraghénane, qui permet d'obtenir des gels plus tendres, moins cassants, se trouve souvent en quantité prédominante dans les mélanges de carraghénanes du commerce. On l'utilisera donc de préférence dans le procédé selon l'invention.

Bien que l'on préfère selon la présente invention substituer la totalité de la gélatine, il est toutefois possible de n'en substituer qu'une partie. Ainsi, lesdites confiseries gélifiées contenant peu ou pas de gélatine s'entendent comme comprenant de 0 à 8% en poids sec de gélatine.

Pour mettre en oeuvre le procédé selon l'invention, on s'y prend comme suit ou de manière équivalente.

Tous les pourcentages exprimés ci-après sont en poids par rapport à la matière sèche.

On prépare une suspension comprenant un mélange d'amidon riche en amylopectine et de carraghénanes et un édulcorant, dans de l'eau de manière à obtenir une matière sèche comprise entre 65 et 72% en poids. En deçà de 65% de matière sèche, la cuisson peut être réalisée mais elle devra être suivie par une étape de déshydratation pour amener la matière sèche du mélange à une valeur comprise entre 65 et 72%. Cette étape supplémentaire est coûteuse et ne correspond pas aux pratiques industrielles habituelles.

Au-delà de 72% de matière sèche, la viscosité développée par le mélange nuit aux opérations de cuisson, transport, coulée. De plus, une haute matière sèche, donc une haute viscosité, empêche la formation conjointe des gels de carraghénanes et d'amidon et conduit alors à l'obtention de gommes ne présentant pas la structure élastique recherchée.

On procède ensuite à la cuisson de ladite suspension, à une température suffisante pour que l'amidon soit cuit et dispersé. On peut utiliser pour la cuisson tout cuiseur connu de l'homme du métier. La température de cuisson généralement appliquée est de l'ordre de 120 à 130°C. Le temps de cuisson dépendra du matériel choisi. A titre d'exemple, on peut cuire la suspension dans un cuiseur de type échangeur tubulaire VOMATEC à 120°C pendant environ 120 secondes.

En ce qui concerne les proportions d'amidon et de carraghénanes, on préfère que la suspension comprenne 0,2 à 20%, de préférence 0,4 à 15% d'amidon riche en amylopectine, et 0,5 à 6%, de préférence 2 à 6%, de carraghénanes.

Selon que l'on souhaite substituer tout ou partie de la gélatine, ladite suspension comprendra de 0 à 8% de gélatine.

En ce qui concerne l'édulcorant la suspension en comprend avantageusement 35 à 85%, de préférence 40 à 80%.

La suspension peut comprendre en outre 0 à la% d'un ou plusieurs composés choisis dans le groupe constitué par les arômes, acides, colorants, graisses, huiles, tensio-actifs, humectants, vitamines et conservateurs. Ce ou ces composés sont de préférence ajoutés après l'étape de cuisson de la suspension de manière à éviter la dégradation des composés sensibles à la chaleur.

En ce qui concerne l'édulcorant, on peut utiliser divers sucres ou polyols, sous forme de poudre à dissoudre dans l'eau ou directement sous forme de sirops prêts à l'emploi comme par exemple les sirops de glucose, de fructose, les sirops de glucose riches en maltose, le saccharose, le fructose, le maltose, le tréhalose, le mannose, le dextrose, ou l'isomalt, le maltitol, le sorbitol, le mannitol, le lactitol, l'érythritol, le xylitol, seuls ou en mélanges entre eux, ainsi que des édulcorants intenses comme par exemple la saccharine, l'aspartame ou l'acésulfame K.

A titre d'exemple, l'édulcorant peut être constitué par un mélange composé de 40% de saccharose et de 60% de sirop de glucose d'un DE de 60.

La suspension cuite est ensuite mise en forme. Pour ce faire, on peut procéder à un coulage de la suspension dans de l'amidon dans lequel sont imprimées les formes désirées. On peut également utiliser d'autres techniques de formage, comme par exemple l'extrusion, l'injection-moulage, le coulage dans des moules.

On obtient alors des confiseries que l'on laisse étuver de manière à obtenir la gélification complète desdites confiseries. Les conditions d'étuvage sont choisies de manière à évaporer de façon continue et sans provoquer de croûtage la quantité d'eau excédentaire : les confiseries gélifiées sont coulées à une matière sèche comprise entre 65 et 72% et sont donc étuvées jusqu'à obtenir une matière sèche comprise entre 78 et 90% selon les niveaux de fermeté et d'élasticité désirés. Selon un mode de réalisation préférentiel de l'invention, les conditions d'étuvage sont de 4 heures à 60°C et 30% d'humidité relative, puis 18 heures à 60°C et 20% d'humidité relative.

Les confiseries gélifiées obtenues à l'issue de cet étuvage sont ensuite récupérées. On procède alors si nécessaire à un nettoyage des formes obtenues par brossage, et à des opérations complémentaires telles que par exemple le polissage, l'huilage, le givrage, le candisage avec un sucre et/ou un acide.

Les confiseries gélifiées contenant peu ou pas de gélatine selon la présente invention comprennent de préférence 0,2 à 20%, de préférence 0,4 à 15% d'amidon riche en amylopectine, 0,5 à 6%, de préférence 2 à 6% de carraghénanes, et 35 à 85%, de préférence 40 à 80% d'édulcorant, avec une teneur en eau d'environ 15%.

Lesdites confiseries comprennent en outre de 0 à 8% de gélatine selon que l'on souhaite substituer tout ou partie de cette dernière.

Selon un mode préférentiel de réalisation de l'invention, les dites confiseries gélifiées comprennent 0,5% d'amidon de maïs waxy et 2,5% d'iota-carraghénane.

Ces nouvelles confiseries présentent un aspect et une texture comparables à des confiseries gélifiées à la gélatine de l'art antérieur. Conformément à l'invention, une substitution totale ou partielle de la gélatine est ainsi rendue possible. La présente invention a donc également pour objet l'utilisation d'un mélange comprenant 0,2 à 20%, de préférence 0,4 à 15% en poids d'amidon riche en amylopectine et 0,5 à 6%, de préférence 2 à 6%, en poids d'iota-carraghénane pour substituer tout ou partie de la gélatine dans une confiserie gélifiée.

L'invention sera mieux comprise à la lecture des exemples qui suivent, qui se veulent illustratifs et non limitatifs.

### EXEMPLE 1 : préparation de confiseries gélifiées selon l'invention.

| **Formule 1 :** | | |
|---|---|---|
| | **COMPOSITION MISE EN OEUVRE** | **COMPOSITION PRODUIT FINI (%)** |
| WAXILYS®200* | 37 | 4.4 |
| CARRAGHENANES SATIAGEL DF 52 | 38 | 5.1 |
| EAU | 278.4 | - |
| SIROP DE GLUCOSE FLOLYS® B6080S | 381 | 41.2 |
| SACCHAROSE | 254 | 34.3 |
| ACIDE CITRIQUE A 50% MS | 10 | 0.7 |
| AROME, COLORANT | QS | QS |
| EAU RESIDUELLE | - | 14.3 |
| total | 1000,0 | 100,0 |

| | | |
|---|---|---|
| * WAXILYS®200 est un amidon de mais cireux natif, comprenant environ 99.5% d'amylopectine et commercialisé par la Demanderesse. | | |

| Formule 2 : | |
|---|---|
| | COMPOSITION PRODUIT FINI (%) |
| WAXILYS®200 | 0.5 |
| CARRAGHENANES GENUTINE TYPE 9303 KELCOGEL F | 2.5 |
| SIROP DE GLUCOSE FLOLYS® B6080S | 53 |
| SACCHAROSE | 27.8 |
| CITRATE DE SODIUM | 0.6 |
| ACIDE CITRIQUE A 50% MS | 0.6 |
| AROME, COLORANT | QS |
| EAU RESIDUELLE | 15 |
| total | 100,0 |

Mode opératoire :
- disperser le mélange carraghénane, saccharose dans le sirop de glucose préchauffé à 60°C
- disperser l'amidon dans l'eau et l'incorporer au mélange précédent
- préchauffer l'ensemble à 80°C
- cuire sur cuiseur haute pression (sur échangeur tubulaire à 120°C pendant 120s)
- ajouter l'arôme et l'acide
- couler dans l'amidon et étuver pour obtenir 84 à 88 brix selon la fermeté désirée (ex : 60°C, 30%HR 4heures, puis 60°C, 20%HR 18 heures)
- lever, brosser, huiler les confiseries gélifiées obtenues.

Les confiseries gélifiées ainsi obtenues ont un aspect et une texture tout à fait satisfaisantes et comparables à des gélifiés à base de gélatine uniquement.

Selon la formule 1, les confiseries ont une fermeté de 2 Newtons et une élasticité de 60.3%.

Selon la formule 2, elles ont une fermeté de 2.4 N et une élasticité de 67.3%.

(ces données de fermeté et d'élasticité correspondent à des mesures INSTRON)

## Revendications

1. Procédé de préparation d'une confiserie gélifiée contenant peu ou pas de gélatine, à base d'amidon, **caractérisée en ce qu'**elle comprend les étapes de ;
- formation d'une suspension d'édulcorant et d'un mélange d'amidon riche en amylopectine et de carraghénanes dans de l'eau de manière à obtenir une matière sèche comprise entre 65 et 72% en poids,
- cuisson de ladite suspension à une température telle que l'amidon soit cuit et dispersé,
- mise en forme de la suspension cuite de manière à obtenir des confiseries,
- étuvage des confiseries pour obtenir la matière sèche finale souhaitée,
- récupération des confiseries gélifiées ainsi obtenues.

2. Procédé selon la revendication 1, dans lequel l'amidon riche en amylopectine est un amidon waxy natif.

3. Procédé selon l'une ou l'autre des revendications 1 et 2, dans lequel l'amidon riche en amylopectine est un amidon de maïs waxy.

4. Procédé selon l'une quelconque des revendications 1 à 3, dans lequel la dite suspension comprend 0,2 à 20%, de préférence 0,4 à 15% en poids d'amidon riche en amylopectine, et 0,5 à 6%, de préférence 2 à 6% de carraghénanes.

5. Procédé selon l'une quelconque des revendications 1 à 4, dans lequel ladite suspension comprend 35 à 85% en poids d'édulcorant.

6. Procédé selon l'une quelconque des revendications 1 à 5, dans lequel ladite suspension comprend en outre 0 à 10% d'un ou plusieurs composés choisis dans le groupe constitué par les arômes, acides, colorants, graisses, huiles, tensio-actifs, humectants, vitamines et conservateurs, ces pourcentages étant exprimés en poids sec par rapport à la matière sèche de ladite suspension.

7. Procédé selon l'une quelconque des revendications 1 à 6, dans lequel l'édulcorant est constitué par un ou plusieurs éléments choisis dans le groupe des sucres, polyols, édulcorants intenses et leurs mélanges.

8. Confiserie gélifiée contenant peu ou pas de gélatine, **caractérisée en ce qu'**elle comprend 0,2 à 20%, de préférence 0,4 à 15% en poids d'amidon riche en amylopectine et 0,5 à 6%, de préférence 2 à 6% en poids d'iota-carraghénane

9. Confiserie selon la revendication 8, **caractérisée en ce que** ledit amidon est un amidon de maïs waxy.

10. Utilisation d'un mélange comprenant 0,2 à 20%, de préférence 0,4 à 15% en poids d'amidon riche en amylopectine et 0,5 à 6%, de préférence 2 à 6% en poids d'iota-carraghénane pour substituer tout ou partie de la gélatine dans une confiserie gélifiée.
